# FASCICULE DE BREVET EUROPEEN

(11) **EP 4 482 738 B1**
(45) Date de publication et mention de la délivrance du brevet: **04.02.2026**
(21) Numéro de dépôt: 23711508.4
(22) Date de dépôt: 22.02.2023
(51) Int. Cl.: B64D 29/06, F02K 1/34, F02C 7/24, F02K 1/82, F02C 7/20, F02K 1/72, B64D 5/00, B64D 33/02

(54) **DISPOSITIF D'ABSORPTION ACOUSTIQUE**
SCHALLSCHUTZPANEL
NOISE ATTENUATION UNIT

(30) Priorité: 23.02.2022 FR 2201598
(43) Date de publication de la demande: 01.01.2025
(73) Titulaire: Safran Nacelles, 76700 Gonfreville-l'Orcher (FR)
(72) Inventeur: BELLET, François, 77550 MOISSY-CRAMAYEL (FR); CHANDELIER, Julien, 77550 MOISSY-CRAMAYEL (FR); LEMOINE, Damien, 77550 MOISSY-CRAMAYEL (FR); JOURDAN, Fabien, 77550 MOISSY-CRAMAYEL (FR)
(74) Mandataire: Regimbeau
(86) Numéro de dépôt international: PCT/FR2023/050249
(87) Numéro de publication internationale: WO 2023/161586

(56) Documents cités:
- EP-A2- 2 026 325
- WO-A1-2019/020933
- WO-A1-2020/221976
- FR-A1- 3 101 723
- US-A1- 2015 108 247
- US-A1- 2019 219 000
- US-A1- 2020 217 272
- US-A1- 2021 102 513
- US-B2- 10 875 659
- US-B2- 9 989 010

## Description

### DOMAINE DE L'INVENTION

La présente invention concerne un ensemble propulsif comprenant un moteur d'aéronef et un dispositif d'absorption acoustique.

### ETAT DE LA TECHNIQUE

Le fonctionnement de certains ensembles propulsifs d'aéronef implique l'écoulement d'air qui présente des débits élevés, entraînant parfois des nuisances sonores qu'il est désirable de réduire.

US 2021/102513 A décrit un panneau d'atténuation acoustique pour nacelle de turboréacteur d'aéronef et un procédé de fabrication de ce panneau.

US 10 875 659 B2 décrit une structure d'atténuation acoustique pour ensemble propulsif d'aéronef, comprenant une paroi acoustiquement réfléchissante et un panneau sandwich, le panneau sandwich comportant une structure alvéolaire encadrée par deux peaux acoustiquement poreuses, une peau arrière et une peau, la paroi acoustiquement réfléchissante et le panneau sandwich étant agencés de manière à être séparés par une couche d'air.

US 9 989 010 B2 décrit un inverseur de poussée pour un ensemble moteur d'aéronef, comprenant deux sous-ensembles destinés à entourer un réacteur, chacun desdits sous-ensembles comprenant un capot interne, un capot coulissant externe, une couronne externe, une cloison de bifurcation haute sensiblement verticale, et une cloison de bifurcation basse sensiblement verticale.

### EXPOSE DE L'INVENTION

Un but de l'invention est de diminuer les nuisances sonores liées au fonctionnement d'un ensemble propulsif pour aéronef.

Il est à cet effet proposé, selon un aspect de l'invention, un ensemble pour moteur d'aéronef comprenant :
un conduit configuré pour guider un écoulement d'air ;
une poutre prévue pour supporter un élément mobile d'un inverseur de poussée du moteur, la poutre comprenant une paroi délimitant une pluralité de cavités ouvertes sur l'écoulement d'air ; et
un carénage acoustique comprenant :
   un couvercle acoustiquement poreux ; et
   une pluralité de cloisons solidaires du couvercle ;
le carénage acoustique étant prévu pour être rapporté et fixé sur la poutre de sorte à ce que le couvercle délimite une partie du conduit en obturant les cavités et à ce que chaque cloison s'étende au sein d'une cavité, si bien que le carénage acoustique et la poutre délimitent une pluralité de cellules acoustiques configurées pour absorber une onde acoustique se propageant depuis l'écoulement d'air.

Avantageusement, mais facultativement, l'ensemble selon l'invention peut comprendre l'une au moins parmi les caractéristiques suivantes, prise seule ou en combinaison :
- au moins un passage est ménagé traversant à travers le couvercle de sorte à ce que, une fois le carénage acoustique rapporté et fixé sur la poutre, l'onde acoustique puisse se propager depuis l'écoulement d'air jusque dans au moins une cellule acoustique ;
- le couvercle comprend une portion rigide ;
- le couvercle comprend une portion souple ;
- le couvercle comprend :
   une couche rigide dans laquelle est ménagée une pluralité d'orifices traversants ; et
   une couche souple acoustiquement poreuse et superposée à la couche rigide ;
   dans lequel, une fois le carénage acoustique rapporté et fixé sur la poutre, la couche rigide obture les cavités et la couche souple délimite la partie du conduit ;
- le couvercle et au moins une cloison sont monoblocs ;
- au moins une cloison est rapportée et fixée sur le couvercle ;
- au moins une cloison est acoustiquement poreuse ;
- il comprend en outre un autre carénage acoustique comprenant un autre couvercle acoustiquement poreux et une pluralité d'autres cloisons solidaires de l'autre couvercle, l'autre carénage acoustique étant prévu pour être rapporté et fixé sur la poutre de sorte à que l'autre couvercle obture partiellement une cavité et à ce que les cloisons s'étendent au sein de la cavité, le carénage acoustique étant prévu pour être rapport et fixé sur la poutre de sorte à être superposé à l'autre carénage acoustique ; et
- il comprend en outre un moteur d'aéronef, le moteur comprenant une autre paroi délimitant une autre partie du conduit.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
La figure 1 est une vue en coupe schématique d'un ensemble propulsif pour aéronef dans une configuration de poussée directe.
La figure 2 est une vue en coupe schématique de l'ensemble propulsif de la figure 1 dans une autre configuration d'inversion de poussée.
La figure 3 est une vue en perspective schématique d'une partie d'un ensemble propulsif dans une configuration d'inversion de poussée.
La figure 4 est une vue en perspective schématique d'une partie d'un dispositif d'absorption acoustique comprenant une poutre.
La figure 5 est une vue en perspective schématique d'une autre partie d'un dispositif d'absorption acoustique comprenant un insert formant carénage acoustique.
La figure 6 est une vue en perspective schématique d'un assemblement des parties du dispositif d'absorption acoustique illustrées sur la figure 4 et sur la figure 5.
La figure 7 est une vue en coupe schématique d'un dispositif d'absorption acoustique comprenant deux étages d'absorption.
La figure 8 est une vue en coupe schématique d'un autre dispositif d'absorption acoustique comprenant deux étages d'absorption.

Sur l'ensemble des figures, les éléments similaires portent des références identiques.

### DESCRIPTION DETAILLEE DE L'INVENTION

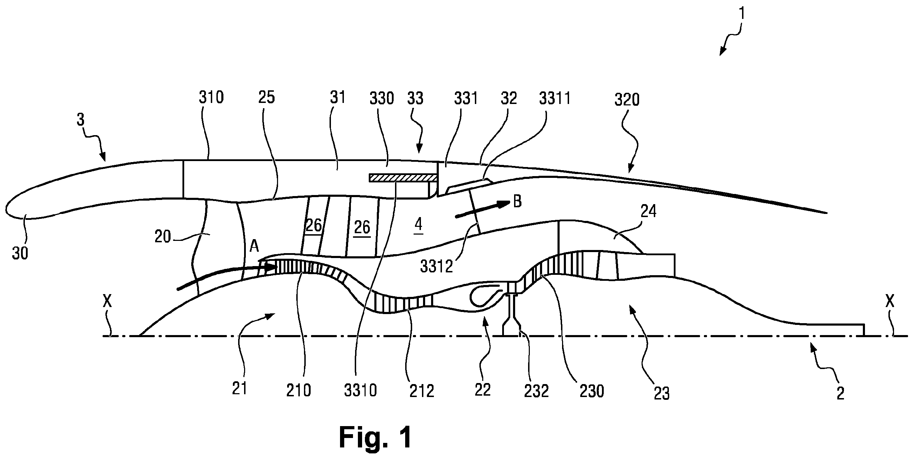

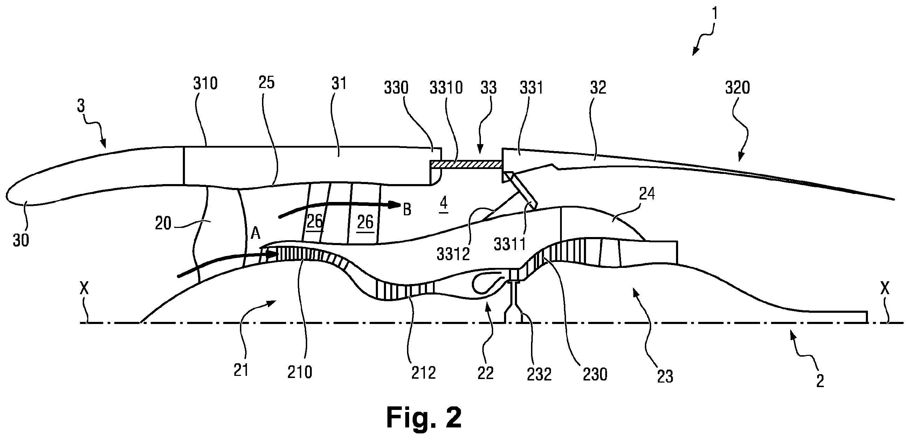

La **figure 1** et la **figure 2** illustrent un ensemble propulsif **1** présentant un axe longitudinal X-X, et comprenant un moteur **2** (ou turbomachine) et une nacelle **3** entourant le moteur **2.**

L'ensemble propulsif 1 est destiné à être monté sur un aéronef (non représenté), tel qu'un avion ou un hélicoptère, par exemple sous l'aile de l'aéronef, sur l'aile ou encore à l'arrière du fuselage de l'aéronef. A cet égard, l'ensemble propulsif 1 peut comprendre un mât (non représenté) destiné à relier l'ensemble propulsif **1** à une partie de l'aéronef.

Le moteur **2** illustré sur la **figure 1** et sur la **figure 2** est un turboréacteur à double corps, double flux et entraînement direct. Ceci n'est toutefois pas limitatif puisque le moteur **2** peut comporter un nombre différent de corps et/ou de flux, et/ou être un autre type de turboréacteur, tel qu'un turboréacteur à réducteur ou un turbopropulseur.

Sauf précision contraire, les termes « amont » et « aval » sont utilisés en référence à la direction globale d'écoulement de gaz à travers l'ensemble propulsif **1** en fonctionnement. De même, une direction axiale correspond à la direction de l'axe longitudinal X-X et une direction radiale est une direction perpendiculaire à l'axe longitudinal X-X et coupant l'axe longitudinal X-X. Par ailleurs, un plan axial est un plan contenant l'axe longitudinal X-X et un plan radial est un plan perpendiculaire à l'axe longitudinal X-X. Une circonférence s'entend comme un cercle appartenant à un plan radial et dont le centre appartient à l'axe longitudinal X-X. Une direction tangentielle ou circonférentielle est une direction tangente à une circonférence : elle est perpendiculaire à l'axe longitudinal X-X mais ne passe pas par l'axe longitudinal X-X. Enfin, les adjectifs « intérieur » (ou « interne ») et « extérieur » (ou « externe ») sont utilisés en référence à une direction radiale de sorte que la partie intérieure d'un élément est, suivant une direction radiale, plus proche de l'axe longitudinal X-X que la partie extérieure du même élément.

Comme visible sur la **figure 1**, et sur la **figure 2**, le moteur **2** comprend, de l'amont vers l'aval, une soufflante **20**, une section de compresseur **21** comprenant un compresseur basse pression **210** et un compresseur haute pression **212**, une chambre de combustion **22** et une section de turbine **23** comprenant une turbine haute pression **232** et une turbine basse pression **230.** La soufflante **20,** le compresseur basse pression **210**, et la turbine basse pression **230** sont reliés entre eux par un arbre basse pression (non représenté) s'étendant le long de l'axe longitudinal X-X pour former un corps basse pression. Le compresseur haute pression **212** et la turbine haute pression **232** sont reliés entre eux par un arbre basse pression (non représenté) s'étendant le long de l'axe longitudinal X-X pour former un corps haute pression. Comme visible sur la **figure 1** et sur la **figure 2**, la section de compresseur **21**, la chambre de combustion **22** et la section de turbine **23** sont entourés par un carter moteur **24**, tandis que la soufflante **20** est entourée par un carter de soufflante **25**. Le carter moteur **24** et le carter de soufflante **25** sont reliés entre eux par des bras structuraux **26**. L'axe longitudinal X-X forme axe de rotation pour la soufflante **20**, la partir rotor de la section de compresseur **21** et la partie rotor de la section de turbine **23**, lesquelles sont susceptibles d'être entraînées en rotation autour de l'axe longitudinal X-X par rapport au carter moteur **24** et au carter de soufflante **25**.

La nacelle **3** s'étend radialement à l'extérieur du moteur **2**, tout autour de l'axe longitudinal X-X, de sorte à entourer à la fois le carter de soufflante **25** et le carter moteur **24**, et à définir, avec une partie aval du carter moteur **24**, une partie aval d'une veine secondaire **B**, la partie amont de la veine secondaire **B** étant définie par le carter de soufflante **25** et une partie amont du carter moteur **24.** La nacelle **3** comprend une section amont **30** formant une entrée d'air pour la soufflante **20**, une section intermédiaire **31** qui comporte des capots de soufflante **310** enveloppant le carter de soufflante **25**, et une section aval **32** comprenant des capots mobiles **320.** Ceci n'est toutefois pas limitatif, puisque la section amont, la section intermédiaire et la section aval peuvent être d'un seul tenant, entourant à la fois le carter de soufflante et le carter moteur, de sorte à définir la veine secondaire. Ce cas se présente notamment lorsque, contrairement à la nacelle **3** illustrée sur la **figure 1** et sur la **figure 2**, la nacelle ne comprend pas d'inverseur de poussée et forme uniquement une tuyère pour le flux d'air circulant à travers la veine secondaire.

En fonctionnement, la soufflante **20** aspire un flux d'air dont une portion, circulant au sein d'une veine primaire **A**, est, successivement, comprimée au sein de la section de compresseur **21**, enflammée au sein de la chambre de combustion **22** et détendue au sein de la section de turbine **23** avant d'être éjectée hors du moteur **2**. La veine primaire A traverse le carter moteur **24** de part en part. Une autre portion du flux d'air circule au sein de la veine secondaire **B** qui prend une fourme annulaire entourant le carter moteur **24.** De cette manière, l'ensemble propulsif **1** génère une poussée. Cette poussée peut, par exemple, être mise au profit de l'aéronef sur lequel l'ensemble propulsif **1** est rapporté et fixé.

La veine secondaire **B** forme un conduit **4** configuré pour guider un écoulement d'air à travers l'ensemble propulsif **1.** Chacun du moteur 2, et plus précisément chacun du carter de soufflante **25** et du carter moteur **24,** et de la nacelle **3** comprend une paroi délimitant une partie du conduit **4.** Chaque paroi est ainsi exposée à l'écoulement d'air, c'est-à-dire qu'elle présente une surface en contact avec l'écoulement d'air.

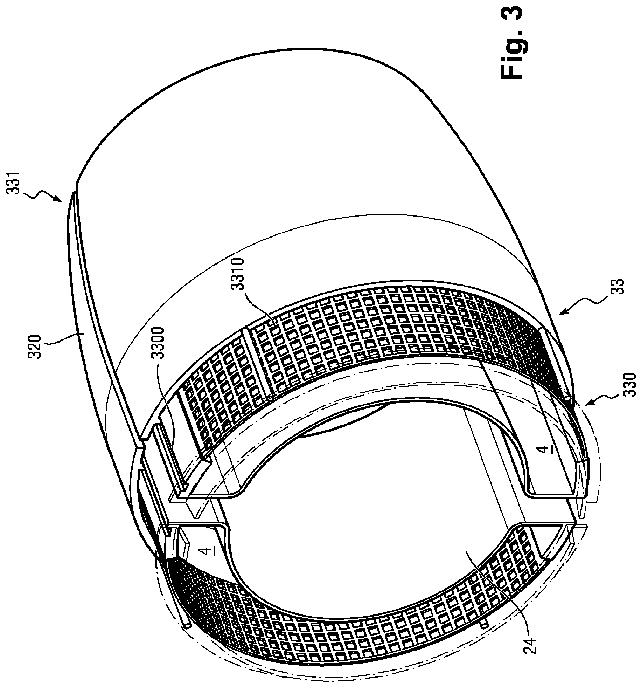

Comme visible sur la **figure 1** et sur la **figure 2****,** la nacelle **3** comprend en outre un inverseur de poussée 33 comprenant une structure fixe **330,** solidaire du carter de soufflante **25,** et une structure mobile **331** par rapport à la structure fixe **330.** Lorsque l'inverseur de poussée **33** est à grilles, comme illustré de la **figure 1** à la **figure 3****,** la structure mobile **331** de l'inverseur de poussée **33** comprend une pluralité de grilles de déviation **3310,** les capots mobiles **320,** des volets d'obturation **3311** et des biellettes **3312** permettant d'actionner les volets d'obturation **3311.** La structure fixe **330** comprend, quant à elle, une poutre (non représentée) prévue pour supporter au moins un élément de la structure mobile **331,** typiquement au moins un des capots mobiles **320.**

La **figure 1** illustre l'inverseur de poussée **33** dans une configuration de poussée directe. Dans cette configuration, la structure mobile **331** est dans une position de fermeture dans laquelle les capots mobiles **320** sont en appui sur la structure fixe **330,** de préférence en appui sur une pluralité de poutres. Dans cette position de fermeture, les grilles de déviation **3310** sont logées dans un espace délimité radialement par le carter de soufflante **25** et par les capots de soufflante **310.** En configuration de poussée directe, les volets d'obturation **3311** sont rétractés au sein d'une cavité formée par les capots mobiles **320.** L'inverseur permet ainsi de canaliser le flux d'air au sein de la veine secondaire **B,** vers l'arrière de l'ensemble propulsif **1,** de manière à générer une poussée. Ainsi, sur la **figure 1****,** les grilles de déviation **3310** et les capots mobiles **320,** qui sont solidaires axialement les uns des autres, sont représentés dans une position avancée.

La **figure 2** illustre l'inverseur de poussée **33** dans une configuration d'inversion de poussée. Dans cette configuration, la structure mobile **331** est dans une position d'ouverture dans laquelle les capots mobiles **320** sont longitudinalement éloignés de la structure fixe **330** de manière à définir une ouverture radiale de la veine secondaire **B.** Les grilles de déviation **3310** s'étendent à travers cette ouverture radiale. Dans cette configuration d'inversion de poussée, les volets d'obturation **3311** sont déployés radialement dans la veine secondaire **B** de manière à diriger le flux d'air circulant au sein de la veine secondaire **B** vers les grilles de déviation **3310** lesquelles permettent d'orienter le flux d'air ainsi redirigé vers l'avant de l'ensemble propulsif **1** dans le but de générer une contre-poussée. Ainsi, sur la **figure 2****,** les grilles de déviation **3310** et les capots mobiles **320** de la structure mobile **331** sont représentés dans une position reculée.

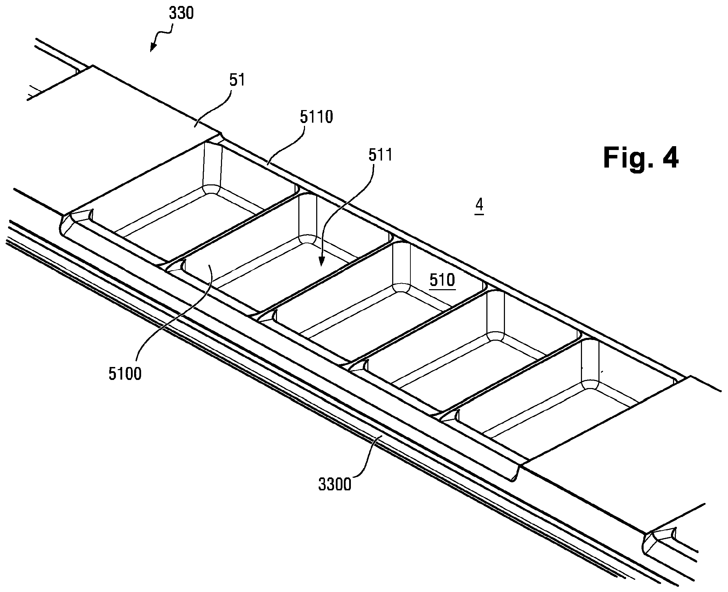

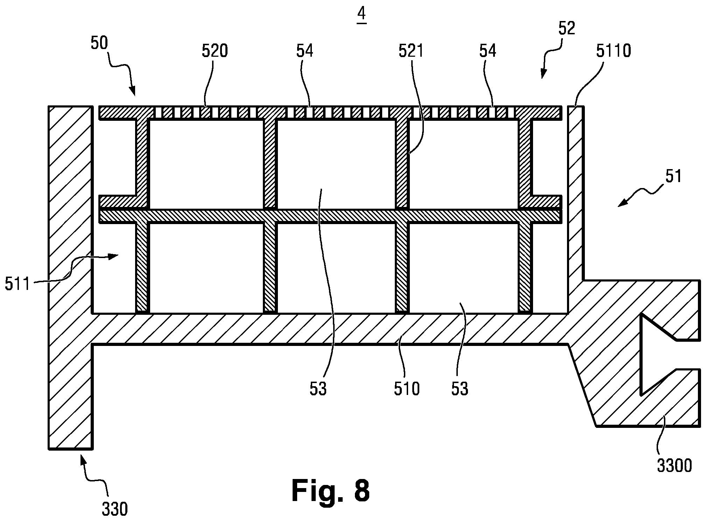

La **figure 3** illustre une partie d'un inverseur de poussée **33** selon un autre mode de réalisation dans lequel les grilles de déviation **3310** appartiennent à la structure fixe **330,** l'inverseur de poussée **33** étant dans une configuration d'inversion de poussée. Sur la **figure 3****,** les éléments logés à l'intérieur du carter moteur **24** ont été omis par souci de clarté. Comme visible sur la **figure 3****,** la structure fixe **330** de l'inverseur de poussée **33** comprend des éléments de guidage **3300** des capots mobiles **320** lors de leur déplacement entre la position avancée et la position reculée. Typiquement, ces éléments de guidage **3300** comprennent au moins un rail **3300** s'étendant axialement, le rail **3300** étant relié solidairement au carter de soufflante (non représenté sur la **figure 3**) dans la mesure où le rail **3300** est ménagé au sein d'une poutre de la structure fixe **330.** Sur la **figure 3**, le rail **3300** est agencé au niveau d'une surface radialement externe de la structure fixe **330**. Ceci n'est toutefois pas limitatif puisque le rail peut également être agencé au niveau d'un bord circonférentiel de la structure fixe **330,** comme illustré de la **figure 4** à la **figure 8****.** La **figure 3** illustre que les grilles de déviation **3310** se succèdent selon une direction circonférentielle en étant regroupées en deux ensembles latéraux comprenant chacun plusieurs grilles de déviation **3310,** et s'étendant chacun sur un secteur angulaire. Les deux ensembles latéraux de grilles de déviation **3310** sont écartés latéralement l'un de l'autre au niveau de leurs extrémités en regard deux à deux, pour ménager des espaces supérieur et inférieur respectivement dédiés au passage du mât et d'une poutre longitudinale inférieure (non représentés).

Dans d'autres modes de réalisation (non représentés), l'inverseur de poussée est à portes. Dans ce cas, la structure mobile comprend des portes pivotant autour de pivots fixés à la structure fixe. En configuration de poussée directe, les portes sont intégrées à la nacelle et délimitent une partie du conduit de sorte à canaliser le flux d'air au sein de la veine secondaire, vers l'arrière de l'ensemble propulsif, de manière à générer une poussée. Dans une configuration d'inversion de poussée, la portion aval des portes obture le flux d'air circulant au sein de la veine secondaire de sorte à le forcer à circuler à travers l'orifice ainsi créé à travers la nacelle. La portion amont des portes est généralement munie d'un béquet déflecteur pour rediriger le flux d'air ainsi éjecté de la nacelle vers l'avant de l'ensemble propulsif, dans le but de générer une contre-poussée.

Différents modes de réalisation d'un dispositif d'absorption acoustique **5** agencé au niveau d'au moins une poutre **51** munie d'un rail **3300** de la structure fixe **330** de l'inverseur de poussée **33** sont illustrés de la **figure 4** à la **figure 8****.**

Le dispositif d'absorption acoustique **5** comprend une paroi de conduit **50** délimitant une partie du conduit **4** de la veine secondaire **B.** Cette paroi de conduit **50** étant en contact avec l'écoulement d'air, il peut être utile de la traiter acoustiquement afin de limiter les nuisances sonores associés à l'écoulement d'air lors du fonctionnement de l'ensemble propulsif **1.** Ce traitement consiste notamment à rendre la paroi de conduit **50** acoustiquement poreuse, c'est-à-dire à la modifier de sorte à la rendre perméable à au moins une onde acoustique, laquelle est ainsi en mesure de se propager à travers la paroi de conduit **50** sans être altérée (ou modifiée) au passage de la paroi de conduit **50.**

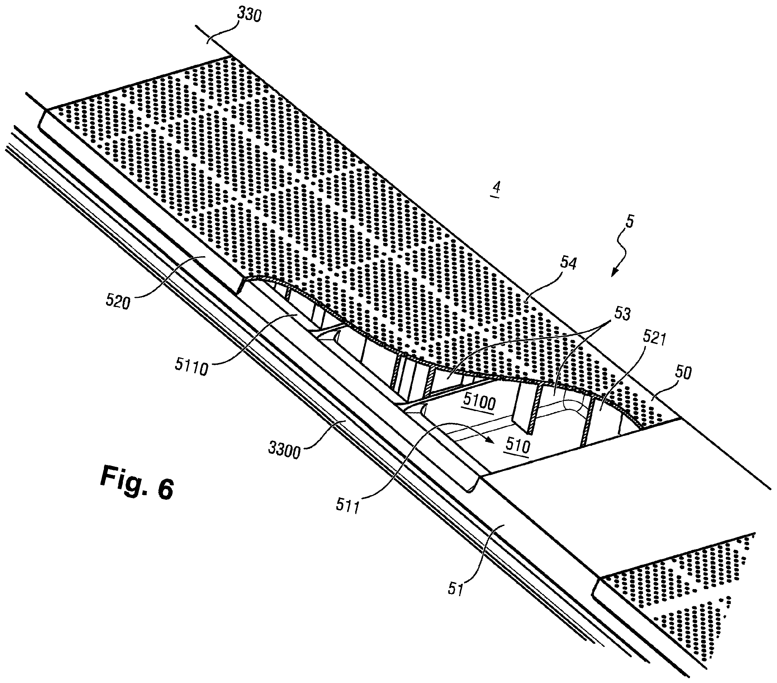

Comme illustré sur la **figure 4**, le dispositif d'absorption acoustique **5** comprend une poutre **51** formant partie structurale, la poutre **51** comprenant une paroi **510** délimitant au moins une cavité **511** ouverte, de préférence une pluralité de cavités **511** ouvertes, les cavités **511** pouvant prendre n'importe quelle forme, telle qu'une forme parallélépipédique ou hexagonale. Dans le mode de réalisation illustré de la **figure 4** à la **figure 6****,** la cavité **511** est ouverte sur l'écoulement d'air du conduit **4.** Même, la paroi **510** comprend plusieurs parties, qui sont en fait des raidisseurs **5100** de la poutre **51,** délimitant la pluralité de cavités **511** ouvertes. Les cavités **511** peuvent être obtenues en usinant la poutre **51** dans son épaisseur, ou par moulage, voire même par fabrication additive. En outre, la paroi **510** présente un bord **5110.**

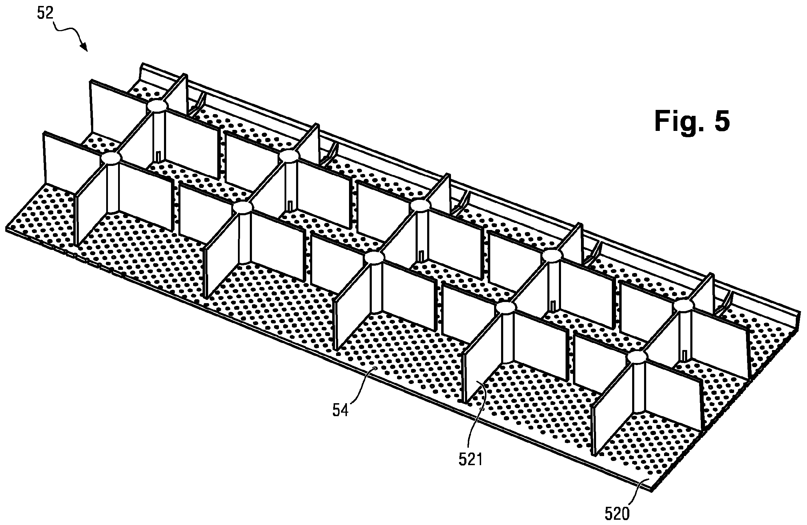

Le dispositif d'absorption acoustique **5** comprend en outre un insert **52**, visible sur la **figure 5**, lequel forme un carénage acoustique et comprend un couvercle **520** acoustiquement poreux et au moins une cloison **521** solidaire du couvercle. L'insert **52** peut comprendre tout type de matériau adapté, tel qu'un matériau thermoplastique, le couvercle **520** pouvant être réalisé en matériau composite, métallique ou thermoplastique. Dans ce mode de réalisation, comme visible sur la **figure 5****,** la cloison **521** et le couvercle **520** sont monoblocs, c'est-à-dire qu'ils sont venus de matière entre eux, typiquement par moulage, thermocompression, fabrication additive ou par tous types d'usinages appropriés, ce qui permet de faciliter la fabrication de l'insert **52.** Dans ce mode de réalisation, l'insert **52** comprend une pluralité de cloisons **521,** certaines cloisons **521** étant reliées entre elles. La **figure 6** illustre que l'insert **52** est rapporté et fixé au support **51** de sorte à ce que le couvercle **520** ferme (ou obture) au moins une partie de la cavité **511,** voire de toutes les cavités **511,** et à ce que la cloison **521** soit positionnée à l'intérieur de la cavité **511** de sorte à séparer la cavité **511** en au moins deux cellules **53** fermées (ou alvéoles) distinctes. De cette manière, chaque cellule **53** est délimitée par au moins une partie de la paroi **510** et au moins une partie de la cloison **521.** Comme visible sur la **figure 6****,** la paroi de conduit **50** est ainsi formée par au moins une partie du couvercle **520.** En fait, l'insert **52** est rapporté et fixé sur la poutre **51** de sorte à ce que le couvercle **520** délimite une partie du conduit **4** en obturant les cavités **511** et à ce que chaque cloison **521** s'étende au sein d'une cavité **511,** si bien que l'insert **52** et la poutre **51** délimitent une pluralité de cellules **53,** qui sont en fait des cellules acoustiques **53** configurées pour absorber une onde acoustique se propageant depuis l'écoulement d'air. Plus précisément, les cellules **53** forment une caisse de résonnance pour l'air aspiré de l'écoulement d'air qui s'y trouve piégé, ce qui permet d'atténuer les émissions sonores liées à l'écoulement d'air au sein de l'ensemble propulsif **1** en fonctionnement. En d'autres termes, le dispositif d'absorption acoustique **5** tire profit de la structure de la poutre **51,** notamment des raidisseurs **5100**, pour former des cellules **53** formant un réseau de résonateurs de Helmholtz grâce à l'apport du couvercle **520** et des cloisons **521** de l'insert **52.** L'insert **52** peut être fixé au support **51** par tout moyen, typiquement grâce à des cages écrous ou des inserts mécaniques (non représentés). Dans le mode de réalisation illustré sur la **figure 6**, le couvercle **520** affleure même le bord **5110** de la paroi **510** de la poutre **51** de sorte à fermer la cavité **511** et à former la paroi de conduit **50**, ce qui permet de limiter les pertes aérodynamiques au niveau du dispositif d'absorption acoustique **5**. En outre, les cloisons **521** présentent chacune une hauteur sensiblement égale à la profondeur de la cavité **511**, afin d'affleurer le fond de la cavité **511**, ce qui permet d'améliorer l'absorption acoustique.

Comme visible sur la **figure 5** et sur la **figure 6**, le caractère acoustiquement poreux du couvercle **250** est obtenu en ménageant au moins un passage **54** traversant à travers le couvercle **520**, de sorte à ce que, une fois l'insert **52** rapporté et fixé sur la poutre **51**, l'onde acoustique puisse se propager depuis l'écoulement d'air jusque dans au moins une cellule acoustique **53**. La **figure 5** et la **figure 6** illustrent que ce passage **54** peut prendre la forme d'orifices **54** s'étendant à travers la paroi de conduit **50** formée par le couvercle **520,** un des orifices **54** autorisant une circulation d'air depuis l'écoulement d'air jusque dans une cellule **53,** un autre des orifices **54** autorisant une circulation d'air depuis l'écoulement d'air jusque dans une autre des cellules **53.** Plus précisément, le couvercle **520** comprend une couche rigide dans laquelle est ménagées une pluralité d'orifices traversants. Cette couche rigide peut, dans une variante (non représentée) être surmontée d'une couche souple acoustiquement poreuse de sorte à ce que, une fois l'insert rapporté et fixé sur la poutre, la couche rigide obture les cavités et la couche souple délimite une partie du conduit. La couche souple peut prendre la forme d'une mousse acoustique ou d'une peau maillée. En tout état de cause, le couvercle **520** peut comprendre une portion rigide et/ou une portion souple, lesquelles ne sont pas forcément superposées l'une à l'autre, mais peuvent être juxtaposées, la portion rigide et la portion souple étant dans tous les cas traitées de sorte à être acoustiquement poreuses. La couche rigide présente une raideur supérieure à la raideur de la couche souple.

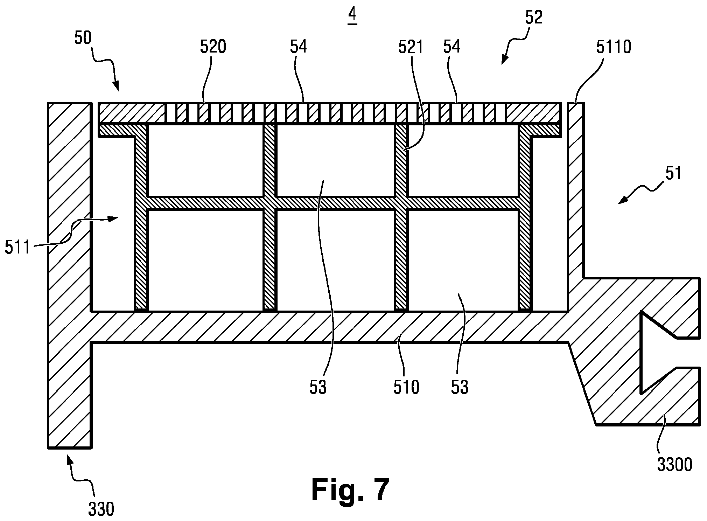

Le mode de réalisation illustré sur la **figure 7** est similaire au mode de réalisation illustré de la **figure 4** à la **figure 6**, à ceci près que la cloison **521** et le couvercle **520** ne sont pas monoblocs, la cloison **521** étant rapportée et fixée sur le couvercle **520**, par tout moyen approprié, tel qu'un élément adhésif, le couvercle **520** formant alors une peau aéroacoustique rapportée sur la partie structurale formée par la poutre **51.** Ce mode de formation de l'insert **52** permet d'apporter plus de souplesse dans sa conception. En outre, l'insert **52** comprend une pluralité de cloisons **521** reliées entre elles et au couvercle **520** de sorte à former deux couches (ou étages) de cellules **53** fermées distinctes, ce qui permet d'améliorer l'absorption acoustique. Typiquement, le réseau formé par les cloisons **521** peut présenter une structure en nid d'abeille, dont les propriétés d'absorption acoustiques sont particulièrement intéressantes. Dans ce cas, d'autres passages (non représentés) peuvent s'étendre à travers certaines cloisons **521** pour que l'air prélevé au niveau de la paroi de conduit **50** atteigne toutes les cellules **53.**

Le mode de réalisation illustré sur la **figure 8** est similaire au mode de réalisation illustré sur la **figure 7**, à ceci près que deux inserts **52** sont rapportés et fixés au support **51**, l'un à la suite de l'autre, comme deux caissons superposés, chacun des inserts **52** comprenant un couvercle **520** et au moins une cloison **521**, les inserts **52** pouvant être fixés l'un à l'autre par tout moyen approprié, tel que de l'adhésif. L'utilisation d'une pluralité d'inserts **52** confère une modularité au dispositif d'absorption acoustique **5** qui peut être utile pour optimiser l'absorption acoustique. Dans ce mode de réalisation, chacun des deux inserts **52** comprend un couvercle **520** acoustiquement poreux et une pluralité de cloisons **521** solidaire du couvercle **520**. En revanche, seul un des inserts **52** obture toutes les cavités **511**, l'autre insert **52** étant inséré au sein d'une des cavités **511** de sorte ce que son couvercle **520** l'obture au moins partiellement, et à ce que ses cloisons **521** délimitent plusieurs cellules acoustiques **53** au sein de cette cavité **511.**

Le dispositif d'absorption acoustique a été décrit selon différents modes de réalisation dans lesquels il est associé à une poutre d'une structure fixe d'un inverseur de poussée d'une nacelle d'un ensemble propulsif pour aéronef. Ceci n'est toutefois pas limitatif, puisqu'un tel dispositif d'absorption acoustique peut être agencé n'importe où dans le conduit guidant l'écoulement d'air à travers la veine secondaire de l'ensemble propulsif d'un aéronef, tant qu'il comprend une paroi de conduit délimitant une partie du conduit, et présentant donc une surface en contact avec l'écoulement d'air par laquelle le dispositif d'absorption acoustique est susceptible de capter une partie de l'air, du fait du caractère acoustiquement poreux de la paroi de conduit, pour la piéger dans les cellules. Typiquement, le dispositif d'absorption acoustique peut être agencé au sein d'une nacelle d'un ensemble propulsif pour aéronef qui ne comprend pas d'inverseur de poussée mais forme une tuyère pour le flux d'air circulant au sein de la veine secondaire. Ainsi, si dans les modes de réalisations décrits, la poutre est reliée au rail de l'inverseur de poussée, dans le cas d'une nacelle sans inverseur de poussée, la poutre est simplement intégrée à la nacelle. D'ailleurs, un tel dispositif d'absorption acoustique peut également être agencé dans n'importe quel conduit guidant un écoulement d'air au sein de l'ensemble propulsif, sans être limité à la veine secondaire. De fait, toute paroi délimitant au moins en partie un conduit guidant un écoulement d'air à travers un ensemble propulsif pour aéronef peut être traitée acoustiquement avec le dispositif d'absorption acoustique tel que précédemment décrit. En traitant acoustiquement une plus grande surface du conduit guidant un écoulement d'air au sein d'un ensemble propulsif, typiquement au moyen du dispositif d'absorption précédemment décrit, il est possible de réduire significativement les nuisances sonores associées au fonctionnement de l'aéronef sur lequel l'ensemble propulsif est rapporté et fixé.

## Revendications

1. Ensemble pour moteur (2) d'aéronef comprenant :
un conduit (4) configuré pour guider un écoulement d'air ;
une poutre (51) prévue pour supporter un élément mobile (320) d'un inverseur de poussée (33) du moteur (2), la poutre (51) comprenant une paroi (510) délimitant une pluralité de cavités (511) ouvertes sur l'écoulement d'air ; et
un carénage acoustique (52) comprenant :
un couvercle (520) acoustiquement poreux ; et
une pluralité de cloisons (521) solidaires du couvercle (520) ;
le carénage acoustique (52) étant prévu pour être rapporté et fixé sur la poutre (51) de sorte à ce que le couvercle (520) délimite une partie du conduit (4) en obturant les cavités (511) et à ce que chaque cloison (521) s'étende au sein d'une cavité (511), si bien que le carénage acoustique (52) et la poutre (51) délimitent une pluralité de cellules acoustiques (53) configurées pour absorber une onde acoustique se propageant depuis l'écoulement d'air ;
dans lequel le couvercle (520) comprend :
une couche rigide présentant une première raideur et dans laquelle est ménagée une pluralité d'orifices traversants (54) ; et
une couche souple acoustiquement poreuse, présentant une deuxième raideur, et superposée à la couche rigide ;
dans lequel la première raideur est supérieure à la deuxième raideur et, une fois le carénage acoustique (52) rapporté et fixé sur la poutre (51), la couche rigide obture les cavités (511) et la couche souple délimite la partie du conduit (4).

2. Ensemble selon la revendication 1, dans lequel au moins un passage (54) est ménagé traversant à travers le couvercle (520) de sorte à ce que, une fois le carénage acoustique (52) rapporté et fixé sur la poutre (51), l'onde acoustique puisse se propager depuis l'écoulement d'air jusque dans au moins une cellule acoustique.

3. Ensemble selon l'une des revendications 1 et 2, dans lequel le couvercle (520) et au moins une cloison (521) sont monoblocs.

4. Ensemble selon l'une des revendications 1 à 3, dans lequel au moins une cloison (521) est rapportée et fixée sur le couvercle (520).

5. Ensemble selon l'une des revendications 1 à 4, dans lequel au moins une cloison (521) est acoustiquement poreuse.

6. Ensemble selon l'une des revendications 1 à 5, comprenant en outre un autre carénage acoustique (52) comprenant un autre couvercle (520) acoustiquement poreux et une pluralité d'autres cloisons (521) solidaires de l'autre couvercle (520), l'autre carénage acoustique (52) étant prévu pour être rapporté et fixé sur la poutre (51) de sorte à que l'autre couvercle (520) obture partiellement une cavité (511) et à ce que les cloisons (521) s'étendent au sein de la cavité (511), le carénage acoustique (52) étant prévu pour être rapport et fixé sur la poutre (51) de sorte à être superposé à l'autre carénage acoustique (52).

7. Ensemble selon l'un des revendications 1 à 6, comprenant en outre un moteur (2) d'aéronef, le moteur (2) comprenant une autre paroi (510) délimitant une autre partie du conduit (4).

## Patentansprüche

1. Anordnung für Flugzeugtriebwerk (2), umfassend:
einen Kanal (4), der zum Leiten eines Luftstroms ausgelegt ist;
einen Balken (51), der zum Tragen eines beweglichen Elements (320) einer Schubumkehr (33) des Triebwerks (2) vorgesehen ist, wobei der Balken (51) eine Wand (510) umfasst, die eine Vielzahl von Hohlräumen (511) begrenzt, die zum Luftstrom hin offen sind; und
eine Schallschutzverkleidung (52), umfassend:
eine akustisch poröse Abdeckung (520); und
eine Vielzahl von Trennwänden (521), die mit der Abdeckung (520) fest verbunden sind;
wobei die Schallschutzverkleidung (52) zur Anbringung und Befestigung an dem Balken (51) derart vorgesehen ist, dass die Abdeckung (520) einen Teil des Kanals (4) begrenzt, indem sie die Hohlräume (511) verschließt, und dass sich jede Trennwand (521) innerhalb eines Hohlraums (511) erstreckt, so dass die Schallschutzverkleidung (52) und der Balken (51) eine Vielzahl von Schallzellen (53) begrenzen, die ausgelegt sind, um eine sich aus dem Luftstrom ausbreitende Schallwelle zu absorbieren;
wobei die Abdeckung (520) umfasst:
eine starre Schicht, die eine erste Steifigkeit aufweist und in der eine Vielzahl von Durchgangsöffnungen (54) ausgebildet sind; und
eine akustisch poröse flexible Schicht, die eine zweite Steifigkeit aufweist, und die auf der starren Schicht aufliegt;
wobei die erste Steifigkeit größer ist als die zweite Steifigkeit und, sobald die Schallschutzverkleidung (52) am Balken (51) angebracht und befestigt ist, die starre Schicht die Hohlräume (511) verschließt und die flexible Schicht den Teil des Kanals (4) begrenzt.

2. Anordnung nach Anspruch 1, wobei mindestens ein Durchgang (54) durch die Abdeckung (520) derart eingerichtet ist, dass, sobald die Schallschutzverkleidung (52) am Balken (51) angebracht und befestigt ist, sich die Schallwelle vom Luftstrom bis in mindestens eine Schallzelle ausbreiten kann.

3. Anordnung nach einem der Ansprüche 1 und 2, wobei die Abdeckung (520) und mindestens eine Trennwand (521) einteilig sind.

4. Anordnung nach einem der Ansprüche 1 bis 3, wobei mindestens eine Trennwand (521) an der Abdeckung (520) angebracht und befestigt ist.

5. Anordnung nach einem der Ansprüche 1 bis 4, wobei mindestens eine Trennwand (521) akustisch porös ist.

6. Anordnung nach einem der Ansprüche 1 bis 5, die ferner eine weitere Schallschutzverkleidung (52) umfasst, die eine weitere akustisch poröse Abdeckung (520) und eine Vielzahl weiterer Trennwände (521) umfasst, die mit der weiteren Abdeckung (520) fest verbunden sind, wobei die weitere Schallschutzverkleidung (52) zur Anbringung und Befestigung am Balken (51) derart vorgesehen ist, dass die weitere Abdeckung (520) einen Hohlraum (511) teilweise verschließt und dass sich die Trennwände (521) innerhalb des Hohlraums (511) erstrecken, wobei die Schallschutzverkleidung (52) zur Anbringung und Befestigung am Balken (51) derart vorgesehen ist, dass sie auf der anderen Schallschutzverkleidung (52) aufliegt.

7. Anordnung nach einem der Ansprüche 1 bis 6, die ferner ein Flugzeugtriebwerk (2) umfasst, wobei das Triebwerk (2) eine weitere Wand (510) umfasst, die einen weiteren Teil des Kanals (4) begrenzt.

## Claims

1. An assembly for an aircraft engine (2) comprising:
a duct (4) configured to guide an air flow;
a beam (51) provided to support a movable element (320) of a thrust reverser (33) of the engine (2), the beam (51) comprising a wall (510) delimiting a plurality of cavities (511) opened to the air flow; and
an acoustic fairing (52) comprising:
an acoustically porous cover (520); and
a plurality of partitions (521) secured to the cover (520);
the acoustic fairing (52) being provided to be added and fixed onto the beam (51) so that the cover (520) delimits part of the duct (4) by obturating the cavities (511) and so that each partition (521) extends within a cavity (511), so that the acoustic fairing (52) and the beam (51) delimit a plurality of acoustic cells (53) configured to absorb an acoustic wave propagating from the air flow;
wherein the cover (520) comprises:
a rigid layer having a first stiffness and in which a plurality of through orifices (54) is provided; and
an acoustically porous flexible layer, having a second stiffness, and superimposed on the rigid layer;
wherein the first stiffness is greater than the second stiffness and, once the acoustic fairing (52) is added and fixed onto the beam (51), the rigid layer obturates the cavities (511) and the flexible layer delimits the part of the duct (4).

2. The assembly according to claim 1, wherein at least one passage (54) is arranged passing through the cover (520) so that, once the acoustic fairing (52) is added and fixed onto the beam (51), the acoustic wave can propagate from the air flow to at least one acoustic cell.

3. The assembly according to any of claims 1 and 2, wherein the cover (520) and at least one partition (521) are in one piece.

4. The assembly according to any of claims 1 to 3, wherein at least one partition (521) is added and fixed onto the cover (520).

5. The assembly according to any of claims 1 to 4, wherein at least one partition (521) is acoustically porous.

6. The assembly according to any of claims 1 to 5, further comprising another acoustic fairing (52) comprising another acoustically porous cover (520) and a plurality of other partitions (521) secured to the other cover (520), the other acoustic fairing (52) being provided to be added and fixed onto the beam (51) so that the other cover (520) partially obturates a cavity (511) and that the partitions (521) extend within the cavity (511), the acoustic fairing (52) being provided to be added and fixed onto the beam (51) so as to be superimposed on the other acoustic fairing (52).

7. The assembly according to any of claims 1 to 6, further comprising an aircraft engine (2), the engine (2) comprising another wall (510) delimiting another part of the duct (4).
